(19) Europäisches Patentamt / European Patent Office / Office européen des brevets

(11) **EP 1 829 243 B1**

(12) **EUROPÄISCHE PATENTSCHRIFT**

(45) Veröffentlichungstag und Bekanntmachung des Hinweises auf die Patenterteilung:
**29.09.2010 Patentblatt 2010/39**

(21) Anmeldenummer: **05849776.9**

(22) Anmeldetag: **20.12.2005**

(51) Int Cl.:
*H04W 52/26* (2009.01)   *H04W 52/28* (2009.01)
*H04W 52/48* (2009.01)   *H04L 1/08* (2006.01)
*H04L 12/58* (2006.01)

(86) Internationale Anmeldenummer:
**PCT/EP2005/056949**

(87) Internationale Veröffentlichungsnummer:
**WO 2006/067137 (29.06.2006 Gazette 2006/26)**

(54) **VERFAHREN ZUR ÜBERTRAGUNG VON DATENPAKETEN**

METHOD FOR TRANSMITTING DATA PACKETS

PROCEDE POUR LA TRANSMISSION DE PAQUETS DE DONNEES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.12.2004 DE 102004061905**

(43) Veröffentlichungstag der Anmeldung:
**05.09.2007 Patentblatt 2007/36**

(73) Patentinhaber: **SIEMENS AKTIENGESELLSCHAFT
80333 München (DE)**

(72) Erfinder:
• **DÖTTLING, Martin
85579 Neubiberg (DE)**
• **MICHEL, Jürgen
81737 München (DE)**
• **RAAF, Bernhard
82061 Neuried (DE)**

(56) Entgegenhaltungen:
**WO-A-03/017524     WO-A-2004/100393**

• **"3rd Generation Partnership Project; Technical Specification Group Radio Access Network; Feasibility Study for Enhanced Uplink for UTRA FDD; (Release 6)" 3GPP TR 25.896 V2.0.0, März 2004 (2004-03), XP002367017**

**EP 1 829 243 B1**

## Beschreibung

Die Erfindung betrifft ein Verfahren zur Übertragung von Datenpaketen in einem Funksystem sowie ein entsprechendes Kommunikationsgerät, eine Basisstation und das entsprechende Funksystem.

Für den UMTS (Universal Mobile Telecommunication Systems) Enhanced Uplink, eine Aufwärtsverbindung zwischen einer Mobilstation und einer Basisstation, welche eine hohe Übertragungskapazität bietet, wird vorgesehen, dass mehrere Datenströme, sogenannte MAC-D Ströme bzw. "flows" zusammengefasst werden zu einem sogenannten MAC-E Strom. Dieser MAC-E Strom wird dann mit einer bestimmten Sendeleistung sowohl in der erstmaligen Übertragung bzw. Erstübertragung als auch in möglichen Wiederholungsübertragungen übertragen. Hierbei ist nicht vorgesehen, die einzelnen MAC-D Pakete innerhalb eines MAC-E Paketes mit unterschiedlicher Leistung und mit unterschiedlicher Detektionswahrscheinlichkeit zu übertragen. Das würde einen zusätzlichen Aufwand erfordern, da alle MAC-D Pakete eigenständig dekodierbar sein müssten und jeweils eine eigenständige Checksumme erhalten müssten. Des weitere müsste eigenständig signalisiert werden, wie viele MAC-D Pakete von welcher Länge enthalten sind.

Die einzelnen Dätenströme lassen sich unterschiedlichen Diensten zuordnen, beispielsweise einer Videoübertragung oder Sprachübertragungen. Die einzelnen Dienste erfordern teils unterschiedliche Dienstqualitäten bzw. "quality of service" QoS, welche beispielsweise bezüglich Bit- oder Rahmenfehlerrate oder auch Verzögerung definiert werden. Um eine ausreichende Dienstqualität zu gewährleisten, wird als Sendeleistung für den zusammengefassten MAC-E Strom das Maximum aus den Sendeleistungen für die jeweils einzelnen Dienste gewählt. Dadurch wird nun sichergestellt, dass die erforderliche Dienstqualität für jeden einzelnen MAC-D Strom bzw. "flow" erreicht wird.

Aus der WO 03/017524 A ist ein Verfahren sowie eine Vorrichtung zum Einstellen der Sendeleistung in einem Kommunikationssystem bekannt. Bei einer Übertragung von Datenpaketen zwischen einem Sender und einem Empfänger wird gemäß diesem Verfahren für jedes Datenpaket eine Soll-Energie in Abhängigkeit von einer Empfangsenergie eines vorgehenden Datenpakets bestimmt.

Es ist Aufgabe der Erfindung, eine Alternative zu diesem Stand der Technik zu schaffen.

Es ist vorgesehen, dass bei einer Übertragung von Datenpaketen zwischen einem Sender und einem Empfänger mehrere, d.h. zumindest zwei Datenpakete zu einem Übertragungsdatenpaket zum Zwecke der Übertragung zusammengefasst werden.

Nur für das Verständnis und nicht zur Einschränkung eines Anwendungsbereiches der Erfindung sei folgendes angemerkt, bevor die Erfindung weiter erläutert wird:

Für jedes übertragene Datenpaket ist insbesondere eine bestimmte Gesamtenergie bzw. Soll-Energie erforderlich, um das Datenpaket mit einer vorgegebenen Wahrscheinlichkeit korrekt verarbeiten zu können. Diese Gesamtenergie kann nun durch eine einmalige Übertragung mit hoher Sendeleistung oder eine mehrmalige Übertragung mit geringer Sendeleistung erfolgen. Im ersteren Fall ergibt sich eine geringe Verzögerung, bis die vorgegebene Wahrscheinlichkeit erreicht wird, wobei jedoch gleichzeitig aufgrund der hohen Sendeleistung meist ungewünschte Interferenzen in Kauf genommen werden müssen. Das Erfüllen der "Gesamtenergiebedingung" bei nur einer Übertragung wird also nur bei hohen Qualitätsanforderungen, insbesondere hohen Anforderungen an eine geringe Verzögerung, in Erwägung gezogen werden. Im zweiten Fall ergeben sich geringere Interferenzen bei gleichzeitig größerer Verzögerung. Die mehrmalige Übertragung wird also in Erwägung gezogen werden, wenn die Qualitätsanforderungen nicht so hoch sind. Durch Optimierung der Sendeleistungen für die Übertragungen kann ein optimales Profil gefunden werden, welches einen bestmöglichen Kompromiss zwischen Empfangswahrscheinlichkeit und Verzögerung sowie der erzeugten Interferenz darstellt. Im Allgemeinen werden die Anforderungen für verschiedene Dienste unterschiedlich sein, so dass die optimale Sendeleistung sowohl vom übertragenen Dienst als auch von der Übertragung (oder Übertragungsnummer, also erste Übertragung, zweite, dritte ...) abhängt.

Gemäß der Erfindung ist also für jedes einzelne Datenpaket eine individuelle Sendeleistung erforderlich, welche in Abhängigkeit von einer Qualitätsanforderung bei Empfang des Datenpakets bestimmt wird.

Eine Erstübertragung des aus zumindest zwei Datenpaketen gebildeten Übertragungsdatenpakets erfolgt mit einer Erst-Übertragungs-Sendeleistung.

Diese wird beispielsweise vom Empfänger an den Sender signalisiert oder vom Sender ermittelt, beispielsweise als das Maximum der individuellen Sendeleistungen für einzelne Datenpakete.

Nun wird zur Vorbereitung einer eventuell erforderlichen Wiederholungsübertragung eine Wiederholungs-Übertragungsleistung ermittelt. Dieses Ermitteln geschieht unter Berücksichtigung der erforderlichen Gesamtenergie und der bereits übermittelten Energie, welche durch die Sendeleistung der vorhergehenden Übertragungen des Übertragungsdatenpakets definiert ist.

Dies hat den Vorteil, dass für eine eventuell erforderliche Wiederholungsübertragung nur soviel Energie aufgewendet wird, wie tatsächlich erforderlich ist. Dadurch wird die Kapazität einer Datenübertragung erhöht und unnötige Interferenzen vermieden.

Insbesondere wird für den Fall, dass die Empfangsqualität für ein oder mehrere Datenpakete nicht ausreicht, dieses dem Sender vom Empfänger mitgeteilt, woraufhin dieser das Übertragungsdatenpaket mit der Wiederholungs-Übertragungsleistung sendet.

Die Erfindung betrifft ferner ein Kommunikationsgerät zur Durchführung eines solchen Verfahrens sowie ein zentrales Netzwerkelement und ein Funksystem.

Weitere Vorteile der Erfindung werden anhand ausgewählter Ausführungsbeispiele dargelegt, welche anhand von Figuren erklärt werden.

Es zeigen:

Figur 1 eine Übertragung von Datenpaketen in einem Funksystem;

Figur 2 die Multiplexstruktur von MAC-E und MAC-D (auf der linken Seite) und die Zusammensetzung der entsprechenden Datenpakete (auf der rechten Seite).

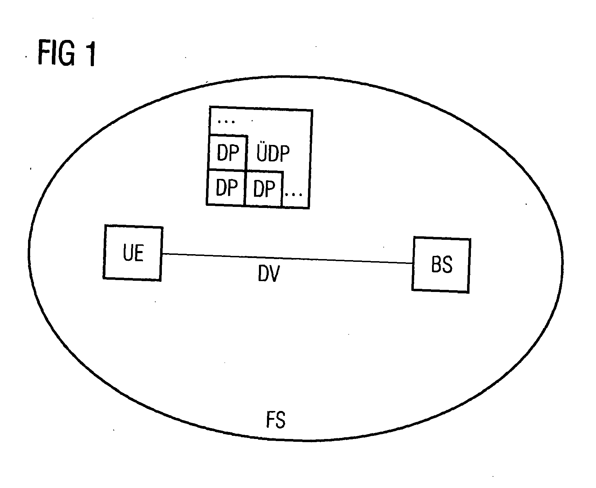

In Fig. 1 ist eine Übertragung von Datenpaketen in einem Funksystem FS zwischen einer Mobilstation UE als Sender und einer Basisstation BS als Empfänger dargestellt.

Die Datenpakete DP werden zu einem Übertragungsdatenpaket ÜDP zusammengefasst und über eine Datenverbindung DV übermittelt.

Bei dem Funksystem FS bzw. Kommunikationsnetz bzw. Kommunikationssystem handelt es sich um eine Struktur zum Austausch von Daten. Es kann sich hierbei beispielsweise um ein zellulares Mobilfunknetzwerk handeln, wie etwa das GSM-Netzwerk (GSM: Global System of Mobile Communications) oder das UMTS-Netzwerk (UMTS: Universal Mobile Telecommunications System).

Das Funksystem FS umfasst zumindest zwei Verbindungs-knoten, es fallen also auch sogenannte Punkt-zu-Punkt-Verbindungen unter diesen Begriff. In einem Funksystem FS sind allgemein Mobilstationen UE vorgesehen, die über eine Funkschnittstelle miteinander in Verbindung treten. Im UMTS weist das Funksystem FS zumindest Basisstationen, welche hier auch Node B genannt werden, sowie Radionetzwerksteuerungseinheiten bzw. Radio Network Controller (RNC) zum Verbinden der einzelnen Basisstationen auf. Das terrestrische Radiozugriffsnetz bzw. "Universal Terrestrial Radio Access Network" UTRAN ist der funktechni-sche Teil eines UMTS-Netzes, in dem beispielsweise auch die Funkschnittstelle zur Verfügung gestellt wird. Eine Funkschnittstelle ist stets genormt und definiert die Gesamtheit der physikalischen und protokollarischen Festlegungen für den Datenaustausch, beispielsweise das Modulationsverfahren, die Bandbreite, den Frequenzhub, Zugangsverfahren, Sicherungsprozeduren oder auch Vermittlungstechniken. Das UTRAN umfasst also zumindest Basisstationen sowie zumindest einen RNC.

Basisstationen sind - neben RNCs etc, als zentrale Einheiten in einem Kommunikationsnetz CN zu verstehen, die im Falle eines zellulären Mobilfunknetzes Mobilstationen oder Kommunikationsgeräte innerhalb einer Zelle, beispielsweise der ersten Zelle oder der zweiten Zelle über einen oder mehrere Funkkanäle bedient. Die Basisstation stellt die Luftschnittstelle zwischen Basisstation und Mobilstation bereit, wozu sie zumindest eine Sende- oder/und Empfangseinheit umfasst.

Ein Kommunikationsgerät UE, insbesondere eine Mobilstation bzw. Terminal kann ein beliebiges Kommunikationsendgerät sein, über das ein Benutzer in einem Funksystem FS kommuniziert. Es fallen beispielsweise Mobilfunkendgeräte, wie Mobiltelefone oder tragbare Computer mit einem Funkmodul, darunter. Im UMTS wird eine Mobilstation oft auch als User Equipment bezeichnet.

Im Mobilfunk wird zwischen zwei Verbindungsrichtungen unterschieden. Die Abwärtsverbindung bzw. "Down-Link" (DL) bezeichnet die Übertragungsrichtung von der Basisstation zur Mobilstation. Die entgegengesetzte Richtung, die Aufwärtsverbindung bzw. "Uplink" (UL) bezeichnet die entgegengesetzte Übertragungsrichtung von der Mobilstation zur Basisstation.

In Breitbandübertragungssystemen, wie beispielsweise einem UMTS-Mobilfunknetz ist ein Kanal ein Teilbereich einer zur Verfügung stehenden Gesamtübertragungskapazität, beispielsweise eines Frequenzbereichs. Als Funkkanal oder Kanal wird im Rahmen dieser Anmeldung ein drahtloser Kommunikationsweg bezeichnet.

In einem Mobilfunksystem, beispielsweise UMTS, sind für die Datenübertragung zwei Arten von Kanälen vorgesehen: fest zugeordnete Kanäle bzw. "Dedicated Channels" und gemeinsam benutzte Kanäle bzw. "Common Channels". Bei den Dedicated Channels wird eine physikalische Ressource nur für die Übertragung von Informationen für eine bestimmte Mobilstation reserviert. Bei den Common Channels können Informationen übertragen werden, die für alle Terminals gedacht sind, wie beispielsweise der primäre gemeinsame physikalische Steuerungskanal PCCPCH im Downlink oder aber alle Mobilstationen teilen sich diese physikalische Ressource.

Der E-DCH, über den eine Mobilstation an die Basisstation Daten senden darf, wenn sie von der Basisstation eine Übertragungserlaubnis erhält, kann als eine Art Mischform angesehen werden. Der E-DCH ist einerseits ein dedicated channel, da er genau eine Mobilstation mit einer oder mehreren Basisstationen verbindet. Andererseits wird von der Basisstation, wie im Falle eines common channels eine Übetragungserlaubnis erteilt. Diese ist nötig, damit der Signalpegel an der Basisstation nicht so hoch wird, dass diese die von verschiedenen Mobilstationen empfangenen Signale nicht einwandfrei decodieren kann.

Ein Übertragungsdatenpaket ÜDP setzt sich also aus einer Mehrzahl, d.h. zumindest zwei einzelnen Datenpaketen DP zusammen. Die einzelnen Datenpakete DP können unterschiedlichen Diensten und damit unterschiedlichen MAC-D flows zugeordnet sein. Dadurch ergeben sich unterschiedliche Anforderungen an die Übertragungsqualität. Um eine bestimmte Übertragungsqualität bzw. eine bestimmte Empfangswahrscheinlichkeit zu erzielen, muss ein Datenpaket mit einer bestimmten "Gesamt-Energie" beim Empfänger eintreffen. Diese Gesamtenergie kann auch in mehreren Übertragungen als Summe der Energien einer Einzelübertragung erzielt werden, weil hier davon ausgegangen wird, dass der Empfänger alle Einzelübertragungen zusammen nimmt, um das Paket zu dekodieren. Diese Verarbeitung nennt man auch softcombining, wobei die Empfangsdaten zusammen genommen werden, bevor eine Dekodierung durchgeführt wird. Auf diese Weise lässt sich eine deutlich bessere Performanz erreichen, als wenn nur jeweils eine einzelne Übertragung berücksichtigt würde. Allerdings müssen dazu natürlich vergangene Übertragungen gespeichert werden, solange eine Dekodierung nicht möglich war. Diese Speicherung erfolgt beispielsweise in einem sog. Soft-Buffer, in dem Empfangssignale zwischengespeichert werden.

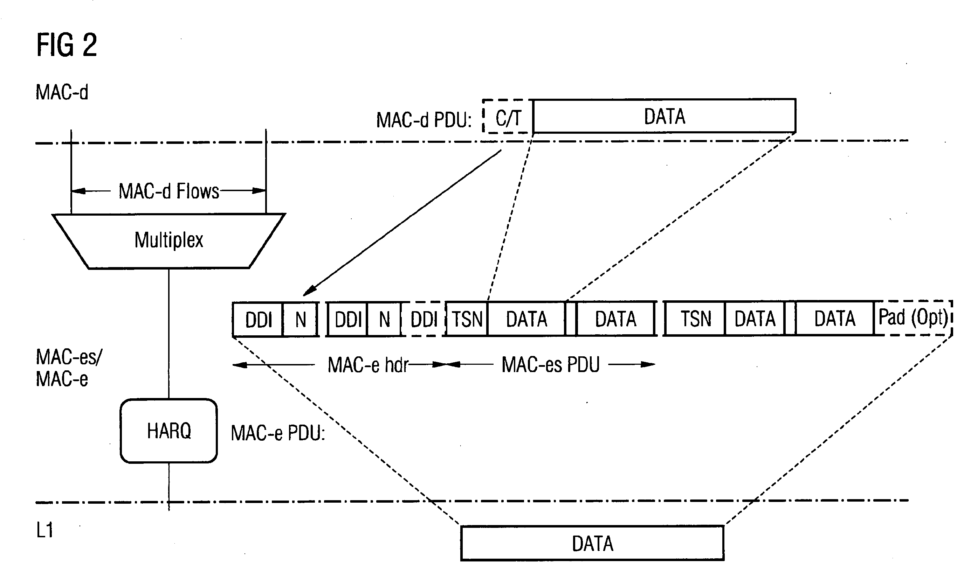

Im Folgenden sollen Beispiele aus dem UMTS System beschrieben werden. Dazu sei zunächst anhand von Fig. 2 die Schichtstruktur, welche zur Realisierung des schnellen Aufwärtskanals E-DCH vorgesehen ist, erläutert:

In Figur 2 ist die Multiplexstruktur für den UMTS Enhanced Uplink von einer Mobilstation zu einer Basisstation dargestellt. Hierbei werden mehrere Datenströme, welche auch MAC-D Ströme bzw. "flows" genannt werden, zusammengefasst zu einem sogenannten MAC-E Strom bzw. flow, welcher dann mit einer bestimmten Sendeleistung sowohl in der Erstübertragung als auch in den möglichen Wiederholungsübertragungen übertragen wird. In Figur 2 ist die physikalische Schicht L1 dargestellt, auf welcher die Daten "DATA" in einem Art "Rohdatenformat" vorliegen. Zum Zwecke des UMTS-Enhanced Uplinks wird der sogenannten "medium access control" layer bzw. Schicht (MAC) in die sogenannte MAC-d Schicht und die MAC-es/MAC-e Schicht unterteilt. Die MAC-e Schicht wird für die Verbesserung der UMTS Uplink Übertragung (Uplink = Aufwärtsrichtung) eingefügt. Sie führt das sog. HARQ (Hybrid ARQ) Protokoll durch. Dabei werden Pakete so oft wiederholt, solange eine negative Rückmeldung (NACK, Not Acknowledge) bzw. bis eine positive Rückmeldung (ACK) erfolgt.

Eine Ausgestaltung der Erfindung für das eingangs genannte Beispiel mit den MAC-E und MAC-D Strömen bzw. "flows" besteht darin, dass berücksichtigt wird, wenn ein MAC-D flow in der Vergangenheit, d.h. bei einer früheren Übertragung eines Übertragungsdatenpakets das diesem MAC-D flow zugeordnete Datenpaket bereits mehr Energie erhalten hat als zum Erreichen seines QoS-Zieles bzw. Qualitätsanforderung nötig gewesen wäre. Dies kann durch die Zusammenfassung der flows erfolgen, wenn die Qualitätsanforderungen für die einzelnen Dienste, welche jeweils in einem MAC-D flow zusammengefasst sind, unterschiedlich sind.

Diese zusätzliche bzw. zuviel erhaltene Energie wird bei der nachfolgenden Wiederholungsübertragung berücksichtigt. Dazu wird die aktuell verwendete Energie nicht anhand einer vorgegebenen Energie für die aktuelle Wiederholungsübertragung bestimmt, sondern anhand einer vorgegebenen Summenenergie (bzw. einer angestrebten Summenübertragunsgleistung) der zu verwendenden Energie bis zu der anstehenden Wiederholungsübertragung. Für die Berechnung der Summenenergie werden die Energien aus den vergangenen Übertragungen des Übertragungsdatenpakets verwendet.

Die Energie wird aus der Sendeleistung und der Sendezeit für das Datenpaket ermittelt.

Dieses Vorgehen führt insbesondere dann zu besseren Ergebnissen, d.h. geringeren Interferenzen bei gleicher Dienstqualität, wenn die unterschiedlichen MAC-D flows unterschiedliche Energieanforderungen für Wiederholungsübertragungen in Relation zur Erstübertragung (erstes Paket) bzw. in Relation zu anderen Wiederholungsübertragungen haben, z.B. weil bei einem Flow die Energie für Wiederholungsübertragungen abgesenkt werden soll, für andere aber nicht.

Insbesondere ist das folgende Vorgehen zur Bestimmung der Sendeleistung der verschiedenen Übertragungen vorgesehen:

1. Als Sendeleistung P(1) für die Erstübertragung $k = 1$ wird das Maximum der vorgegebenen Sendeleistungen aller MAC-D flows verwendet:

$$P(1) = \max_i \{P_i(1, i)\}$$

wobei i die einzelnen unterschiedlichen MAC-D flows bezeichnet. Die nominelle Sendeleistung $P_i(1, i)$ innerhalb eines MAC-D flows ist stets dieselbe für alle zu diesem MAC-D flow gehörenden Datenpakete.

2. Für die Wiederholungsübertragung $k > 1$ wird für jeden MAC-D flow $i$ die Differenz $\Delta P(k,i)$ der angestrebten Summenleistung $P_t(k,\text{i})$ nach $k$ Übertragungen zur (tatsächlichen bisherigen) Summenleistung über alle bisherigen Übertragungen $P(m)$ in der Übertragung m (m läuft von 1 bis k-1) errechnet:

$$\Delta P(k,i) = P_t(k,i) - \sum_{m=1}^{k-1} P(m)$$

3. Die zu verwendende Sendeleistung für das Übertragungsdatenpaket der $k$-ten Übertragung bzw. die k-te Wiederholungsübertragungssendeleistung errechnet sich als Maximum der Differenzleistungen $\Delta P(k,i)$, wobei das Maximum über alle MAC-D flows gebildet wird.

$$P(k) = \max_{i}\left\{\Delta P(k,i)\right\}$$

4. Für die Sendeleistung der $k$-ten Übertragung können außerdem noch Korrekturen berücksichtigt werden. Diese Korrekturen sind im einfachsten und bevorzugten Falle nicht vorhanden. Im allgemeinen Fall können die Korrekturfaktoren jedoch Einflüsse durch geändertes zeitliches Diversity, sowie durch Wechselwirkung von Energieverschiebung und gleichzeitigem Verwenden von Inkrementeller Redundanz (Berücksichtigung der Verbesserung des Kodierungsgewinns) ausgleichen

Die Schritte 2., 3., und 4. werden sequentiell für aufsteigende Übertragungsnummern $k = 2, ..., K$ durchgeführt wobei K die maximale Anzahl von Übertragungen angibt.

Der Vorteil einer derartigen Lösung ist, dass nicht zuviel Leistung verwendet wird und somit unnötige Interferenz vermieden wird, welche die Systemleistung reduziert. Insbesondere wird durch die Anpassung der Sendeleistung die Laufzeit des Akkus am Endgerät verlängert, ohne die jeweils erforderlichen Dienstqualitäten zu unterschreiten. Diese Vorteile werden ohne wesentlichen Mehraufwand erzielt. Anhand weiterer Beispiele sollen die Unterschiede zwischen einem Vorgehen gemäß dem Stand der Technik und gemäß Ausführungen der Erfindung verdeutlicht werden.

Tabellen 1 und 2 zeigen für ein Beispiel mit zwei MAC-D flows die jeweils verwendete Leistung im resultierenden MAC-E flow. In der Zeile der MAC-D flows sind jeweils die nominelle Sendeleistung der aktuellen Übertragung, sowie in Klammern jeweils darunter die sich daraus ergebende Summenleistung aller nominellen Sendeleistungen der vorigen Übertragungen aufgelistet.

Die nominellen Sendeleistungen für die einzelnen MAC-D flows sind hierbei nur theoretisch und werden nicht selbst eingesetzt, da ja zu einzelnen MAC-D flows gehörende Datenpakete für die Übertragung zu Übertragungspaketen zusammengefasst werden, welche dem MAC-E flow angehören. Für ein solches Übertragungspaket kann nur eine (gemeinsame) Leistung angewendet werden.

Die Leistungen sind normiert angegeben, d.h. die nominelle Sendeleistung der Erstübertragung des ersten MAC-D flows wird auf 1 gesetzt. Nach dem bisherigem Vorgehen, wie in Tabelle 1) dargestellt, setzt sich die jeweils höchste Leistungsanforderung per Übertragung durch und nach 2 Übertragungen wurde die normierte Summenleistung 1,5 ausgesandt (Zeile Summenleistung bei MAC E), obwohl lediglich eine Summenleistung von 1,25 benötig würde. Es wird also 20% zuviel Leistung verbraucht. Auch in der 3. Übertragung wird zuviel Leistung verwendet, so dass die normierte Summenleistung 2,0 anstatt 1,5 beträgt, d.h. 33% zuviel.

**Tabelle 1: Normierte MAC-D und resultierende MAC-E flow Leistung nach bisherigem Verfahren**

| Übertragung | 1 | 2 | 3 | 4 |
|---|---|---|---|---|
| **MAC-D flow 1** nominelle Sendeleistung (Summensendeleistung) | 1 (1) | 0,25 (1,25) | 0,25 (1,5) | 1 (2,5) |
| **MAC-D flows 2** nominelle Sendeleistung (Summensendeleistung) | 0, 5 (0,5) | 0, 5 (1,0) | 0, 5 (1,5) | 0, 5 (2,0) |
| **MAC-E flow** | **1** | **0,5** | **0,5** | **1** |

(fortgesetzt)

| Übertragung | 1 | 2 | 3 | 4 |
|---|---|---|---|---|
| Sendeleistung | | | | |
| **MAC-E flow Summnenleistung** | **1** | **1,5** | **2,0** | **3** |

**Tabelle 2: Normierte MAC-D und resultierende MAC-E flow Leistung nach neuem Verfahren**

| Übertragung | 1 | 2 | 3 | 4 |
|---|---|---|---|---|
| **MAC-D flow 1** <br> nominelle Sendeleistung (Summensendeleistung) | 1 <br> (1) | 0,25 <br> (1,25) | 0,25 <br> (1,5) | 1 <br> (2,5) |
| **MAC-D flow 2** <br> nominelle Sendeleistung (Summensendeleistung) | 0,5 <br> (0,5) | 0,5 <br> (1,0) | 0,5 <br> (1,5) | 0,5 <br> (2,0) |
| **MAC-E flow** <br> Sendeleistung | **1** | **0,25** | **0,25** | **1** |
| **MAC-E flow Summenleistung** | **1** | **1,25** | **1,5** | **2,5** |

Eine Ausgestaltung der Erfindung ist in Tabelle 2 gezeigt, wobei keine Korrekturfaktoren verwendet wurden (s.o. Ziffer 4). Dabei wird in jeder Übertragung genau diejenige MAC-E flow Leistung verwendet, welche gerade das Summenleistungs-Kriterium für alle MAC-D flows erfüllt. Somit wird die gesendete Leistung minimiert. Trotzdem werden die angestrebten QoS Anforderungen für alle Kanäle und bei jeder Wiederholungsübertragung erreicht.

Anders ausgedrückt wird nach dem Stand der Technik die Sendeleistung aus dem Maximum der vorgesehenen (nominellen) Sendeleistungen der einzelnen Pakete für eine Übertragung berechnet. Nach der Erfindung wird aber aus den vorgesehenen Sendeleistungen der einzelnen Pakete bei den einzelnen Übertragungen eine angestrebte Summensendeleistung der einzelnen Pakete bei den einzelnen Übertragungen berechnet. Die Sendeleistung des Gesamtpaketes wird dann als Maximum der vorgesehenen Summensendeleistungen der einzelnen Pakete gebildet und aus der Differenz dieser Summensendeleistung zur Summensendeleistung der vorhergehenden Übertragung wird die Sendeleistung für die Übertragung berechnet. Man erhält das selbe Ergebnis, wenn man für jedes einzelne Paket die Differenz der bisherigen Gesamt-Summensendeleistung (für das MAC-D Paket) zur vorgesehenen Summensendeleistung für dieses Paket (diesen MAC-E flow) berechnet und dann das Maximum dieser Differenzen verwendet Es sei angemerkt, dass eine einzelne Differenz hierbei auch negativ ausfallen kann, das Maximum der Differenzen ist in diesem Fall die größte positive Differenz, nicht etwa die betragsmäßig größte Differenz, welche ja auch negativ sein könnte.

Es sei weiterhin folgendes angemerkt: Es kann durchaus vorkommen, dass ein MAC-D flow durch das zusammen multiplexen mit anderen flows eine so starke Energieanhebung erfährt, dass das Summenleistungs-Kriterium für eine Wiederholungsübertragungen schon vor der Aussendung dieser Wiederholungsübertragungen erfüllt ist. Ein solcher flow müsste nach dem Summenleistungs-Kriterium also gar nicht gesendet werden, was andererseits auch nicht zielführend ist, weil damit ein Neuerstellen der Übertragungspakete erfolgen müsste, was zusätzlichen Aufwand bedeutet.

Bei der Kombination mehrerer MAC-D flows in einen MAC-E flow kann dies aber nicht gleichzeitig bei allen MAC-D flows auftreten, da es dann immer einen Flow gibt, dessen Summenleistungs-Kriterium bei der vorhergehenden (Erst- oder Wiederholungs-) Übertragung gerade erfüllt wurde, d.h. dass bei der aktuellen Wiederholungsübertragung muss mindestens mit der nominellen Leistung dieses flows gesendet werden, da für diesen flow bei der vorhergehenden Übertragung keine überschüssige Energie aufgewendet wurde.

Gemäß einem anderen Ausführungsbeispiel wird zusätzlich noch für jede Wiederholungsaussendung eine Minimalleistung angegeben, mit der eine Aussendung mindestens erfolgen muss. Dann wird das Maximum aus der Energieberechnung nach obigem Verfahren und den einzelnen Minimalleistungen der MAC-D flows verwendet. Diese Minimalleistung kann für jede Wiederholungsaussendung gleich gewählt werden. Alternativ kann die Minimalleistung als Bruchteil der vorgesehenen Übertragungsleistung eines MAC-D flows für diese Wiederholungsaussendung gewählt werden.

Es sei angemerkt, dass die unterschiedlichen flows und damit die zugehörigen Datenpakete entweder zu ein und demselben Dienst gehören können, sie können aber auch zu unterschiedlichen Diensten gehören. Prinzipiell ist es nur relevant, dass an einzelne Datenpakete innerhalb des Übertragungsdatenpakets unterschiedliche Qualitätsanforderungen gestellt werden.

Unter einem Dienst wird im Rahmen der Anmeldung eine bestimmte Applikation wie eine Sprachübertragung oder eine Videoübertragung verstanden.

Zur Bestimmung der Sendeleistung für die Wiederholungsdatenpakete ist ein sehr einfaches Vorgehen die Differenz zum noch fehlenden Anteil zu verwenden, wie oben anhand der Tabellen dargelegt.

Weiterhin sind Verfahren vorgesehen, bei denen ein Kompromiss zwischen dem bisherigen Vorgehen und der Differenz gebildet wird, z.B. Minimum aus Differenz und halber nominaler Leistung oder ähnliche Funktionen.

Unter einer nominalen Leistung wird im Rahmen der Anmeldung die Leistung verstanden, die für ein MAC-D Paket bei einer Wiederholungsübertragung verwendet würde, wenn nur dieses Paket im MAC-E übertragen würde.

Im Rahmen der Beschreibung der Erfindung wurde bisher vornehmlich von der auszuwählenden Sendeleistung gesprochen, die aber durch verschiedene Korrekturwerte adaptiert werden kann. Alternativ kann auch die Sendeenergie verwendet werden. Ist die Übertragungsdauer für alle Pakete gleich, so stehen Leistung und Energie immer in einem festen Verhältnis, ansonsten muss die Übertragungsdauer berücksichtigt werden. Des Weiteren kann statt der Sendeleistung auch die Empfangsleistung am Empfänger verwendet werden. Dies wird auch bei UMTS angewandt. Dabei wird ein sog. Pilotkanal gesendet, welcher durch Leistungsregelungskommandos, welche vom Empfänger an den Sender übertragen werden, in seiner Leistung geregelt wird. Dadurch wird erreicht, dass der Pilotkanal mit einer festgelegten Leistung empfangen wird. Eine vorgegebene Empfangs-Leistung für einen Datenkanal wird nun so erreicht, dass ein Leistungsverhältnis des Datenkanals zum Pilotkanal im Sender so eingestellt wird, dass im Empfänger die gewünschte Empfangsleistung erreicht wird. Wird dieses Verfahren gewählt, so ist als Sendeleistung im Sinne der Erfindung zu verstehen die Sendeleistung in Relation zur Leistung des Pilotkanals.

**Patentansprüche**

1. Verfahren zur Übertragung von Datenpaketen (DP) in einem Funksystem (FS) zwischen einem Sender und einem Empfänger, wobei für jedes Datenpaket (DP) und jede Übertragung eine Soll-Energie in Abhängigkeit von einer Qualitätsanforderung für den Empfang beim Empfänger vorgegeben ist, mit folgenden Schritten

   a. Ermitteln einer für jedes Datenpaket (DP) erforderlichen Sendeleistung in Abhängigkeit von der Qualitätsanforderung für den Empfang des Datenpakets (DP);
   b. Bilden eines Übertragungsdatenpakets (ÜDP) aus einer Mehrzahl von Datenpaketen (DP);
   c. Festsetzen einer Erst-Übertragungs-Sendeleistung für eine Erstübertragung des Übertragungsdatenpakets (ÜDP) in Abhängigkeit von den ermittelten Sendeleistungen der einzelnen Datenpakete (DP);
   d. Erstübertragen des Übertragungsdatenpakets (ÜDP) mit der Erst-Übertragungs-Sendeleistung;
   e. Ableiten einer Wiederholungsübertragungs-Sendeleistung in Abhängigkeit einer von der Soll-Energie abgeleiteten Soll-Sendeleistung für das Übertragungsdatenpaket und der Sendeleistung für zumindest eine vorhergegangene Übertragung des Übertragungsdatenpakets (ÜDP).

2. Verfahren nach Anspruch 1, bei dem das Festsetzen der Sendeleistung für das Übertragungsdatenpaket (ÜDP) in Schritt c) auf das Maximum der erforderlichen Sendeleistungen für die einzelnen Dätenpakete (DP) erfolgt.

3. Verfahren nach Anspruch 1 oder 2, bei dem das Ableiten in Schritt e) der Wiederholungsübertragungs-Sendeleistung aus der Differenz zwischen der Soll-Sendeleistung für das Übertragungsdatenpaket (ÜDP) und der Summe der Sendeleistungen der vorhergegangenen Übertragungen des Übertragungsdatenpakets (ÜDP) gebildet wird.

4. Verfahren nach einem der vorangegangenen Ansprüche, bei dem beim Ableiten in Schritt e) eine angestrebte Summen-Sendeleistung durch die Summe der für eine einzelne Übertragung eines einzelnen Datenpakets (DP) erforderlichen Sendeleistung bis zu den anstehen den Wiederholungsübertragung gebildet wird.

5. Verfahren nach Anspruch 3 und 4, bei dem die Differenz $\Delta P(k,i)$ durch

$$\Delta P(k,i) = P_t(k,i) - \sum_{m=1}^{k-1} P(m)$$

gebildet wird, wobei $k$ die Wiederholungsübertragung angibt, $i$ eine Gruppe von Datenpaketen, welche derselben Qualitätsanforderung unterliegen, P(m) die Sendeleistung in der Übertragung m und $P_t(k,i)$ die angestrebte Summen-Sendeleistung für die k-te Übertragung und die i-te Gruppe angeben.

6. Verfahren nach einem der vorhergehenden Ansprüche, bei dem die Qualitätsanforderung eine maximal zulässige Verzögerungszeit oder/und eine empfängerseitige Decodierwahrscheinlichkeit angibt.

7. Verfahren nach einem der vorangegangenen Ansprüche, bei dem beim Ableiten in Schritt d) eine Summen-Sendeleistung aus der für das Übertragungsdatenpaket (ÜDP) erforderlichen Sendeleistung gebildet wird.

8. Verfahren nach einem der vorhergehenden Ansprüche, wobei in dem Funksystem (FS) eine Mehrzahl von Diensten angeboten wird und die Qualitätsanforderung in Schritt a) in Abhängigkeit vom Dienst festgesetzt wird.

9. Verfahren nach einem der vorhergehenden Ansprüche, wobei jedem Dienst ein Datenstrom zugeordnet ist, in welchem in zeitlicher Abfolge einzelne Datenpakete die Daten im Datenstrom darstellen.

10. Verfahren nach einem der Ansprüche 5 bis 9, wobei eine Gruppe jeweils einem bestimmten Dienst zugeordnet ist.

11. Verfahren nach einem der vorhergehenden Ansprüche, bei dem eine Soll-Summen-Sendeleistung oder mindestens ein Parameter zu ihrer Bestimmung vom Empfänger signalisiert wird.

12. Verfahren nach einem der vorhergehenden Ansprüche mit folgenden weiteren Schritten:

f. Empfangen einer Information über eine Qualität des Empfang des Übertragungsdatenpakets (ÜDP) vom Empfänger des Übertragungsdatenpakets;
g. Erneutes Senden des Übertragungsdatenpakets in Abhängigkeit von der Information.

13. Verfahren nach Anspruch 12, bei dem ein erneutes Ableiten zumindest einer weiteren Wiederholungsübertragungs-Sendeleistung in Abhängigkeit von der Soll-Sendeleistung und den Sendeleistungen der vorhergegangenen Übertragungen erfolgt.

14. Kommunikationsgerät mit einer Sende/Empfangseiheit zum Senden oder/und Empfangen von Datenpaketen und einer Prozessoreinheit, welche zur Durchführung eines Verfahrens zu Übertragung von Datenpaketen gemäß einem der Ansprüche 1 bis 13 eingerichtet ist.

15. Zentrale Einheit für ein Funksystem (FS), insbesondere Basisstation (BS) mit einer Sende/Empfangseinheit zum Senden oder/und Empfangen von Datenpaketen und einer Prozessoreinheit, welche zur Durchführung eines Verfahrens mit folgenden Schritten eingerichtet ist:

a. Übermitteln einer Soll-Summen-Sendeleistung oder mindestens eines Parameters zu ihrer Festlegung an ein Kommunikationsgerät;
b. Empfangen von Übertragungsdatenpaketen (ÜDP), welche mit gemäß dem Verfahren nach einem der Ansprüche 1 bis 13 ermittelten Sendeleistungen von dem Kommunikationsgerät gesendet wurden;
c. Decodieren der empfangenen Übertragungsdatenpakete (ÜDP) ; und
d. Aufteilen der empfangenen Übertragungsdatenpakete (ÜDP) in Datenpakete (DP).

16. Funksystem (FS) mit zumindest einem Kommunikationsgerät gemäß Anspruch 14 und einer zentralen Einheit gemäß Anspruch 15.

**Claims**

1. Method for transmitting data packets (DP) in a radio system (FS) between a transmitter and a receiver, wherein for each data packet (DP) and each transmission a nominal energy is predefined as a function of a quality requirement for the reception at the receiver, having the following steps

a. Determining a transmitter power required for each data packet (DP) as a function of the quality requirement for the reception of the data packet (DP);
b. Forming a transmission data packet (ÜDP) from a plurality of data packets (DP);
c. Specifying a first-transmission transmitter power for a first transmission of the transmission data packet (ÜDP) as a function of the determined transmitter powers for the individual data packets (DP);
d. First transmitting the transmission data packet (ÜDP) at a first-transmission transmitter power;

e. Deriving a repeat-transmission transmitter power as a function of a nominal transmitter power derived from the nominal energy for the transmission data packet and from the transmitter power for at least one previous transmission of the transmission data packet (ÜDP).

2. Method according to claim 1 wherein specifying of the transmitter power for the transmission data packet (ÜDP) in step c) is based on the maximum of the required transmitter powers for individual data packets (DP).

3. Method according to claim 1 or 2 wherein the repeat-transmission transmitter power is derived at step e) from the difference between the nominal transmitter power for the transmission data packet (ÜDP) and the sum of the transmitter powers of the previous transmissions of the transmission data packet (ÜDP).

4. Method according to one of the preceding claims wherein during deriving performed at step e) a targeted cumulative transmitter power is formed from the sum of the transmitter power required for an individual transmission of an individual data packet (DP) up to the upcoming repeat transmission.

5. Method according to claim 3 and 4 wherein the difference $\Delta P(k,i)$ is formed by

$$\Delta P(k, i) = P_t(k, i) - \sum_{m=1}^{k-1} P(m),$$

where $k$ is the repeat transmission, $i$ is a group of data packets subject to the same quality requirement, P(m) is the transmitter power in the transmission m and $P_t(k,i)$ is the targeted cumulative transmitter power for the $k$-th transmission and i-th group.

6. Method according to one of the preceding claims wherein the quality requirement indicates a maximal permissible delay and/or a probability of decoding on the receiver side.

7. Method according to one of the preceding claims wherein during deriving performed at step e) a cumulative transmitter power is formed from the transmitter power required for the transmission data packet (ÜDP).

8. Method according to one of the preceding claims wherein a plurality of services are offered in the radio system (FS) and the quality requirement at step a) is specified as a function of the service.

9. Method according to one of the preceding claims wherein each service is assigned a data stream in which individual data packets represent the data in the data stream in chronological order.

10. Method according to one of claims 5 to 9 wherein a group is assigned in each case to a specific service.

11. Method according to one of the preceding claims wherein the nominal cumulative transmitter power or at least one parameter for determining it is signalled by the receiver.

12. Method according to one of the preceding claims having the following further steps:

f. Receiving information about a quality of reception of the transmission data packet (ÜDP) from the receiver of the transmission data packet;
g. Repeated sending of the transmission data packet as a function of the information.

13. Method according to claim 12 wherein at least one further repeat-transmission transmitter power is again derived as a function of the nominal transmitter power and of the transmitter powers of the previous transmissions.

14. Communication device having a sending/receiving unit for sending and/or receiving data packets and having a processor unit set up for implementing a method for transmitting data packets according to one of claims 1 to 13.

15. Central unit in a radio system (FS), in particular a base station (BS) having a sending/receiving unit for sending and/or receiving data packets and having a processor unit set up for implementing a method having the following steps:

a. Conveying a nominal cumulative transmitter power or at least one parameter for determining it to a communication device;
b. Receiving transmission data packets (ÜDP), which were sent by the communication device with transmitter powers determined in accordance with the method according to one of claims 1 to 13;
c. Decoding the received transmission data packets (ÜDP);
d. Dividing the received transmission data packets (ÜDP) into data packets (DP).

16. Radio system (FS) having at least one communication device according to claim 14 and one central unit according to claim 15.

**Revendications**

1. Procédé de transmission de paquets de données (DP) dans un système radio (FS) entre un émetteur et un récepteur, dans lequel, pour chaque paquet de données (DP) et chaque transmission, une énergie de consigne est prédéfinie en fonction d'une exigence de qualité pour la réception chez le récepteur, comportant les étapes suivantes :

a. déterminer une puissance d'émission requise pour chaque paquet de données (DP) en fonction de l'exigence de qualité pour la réception du paquet de données (DP) ;
b. former un paquet de données de transmission (ÜDP) à partir d'une pluralité de paquets de données (DP) ;
c. fixer une puissance d'émission de première transmission pour une première transmission du paquet de données de transmission (ÜDP) en fonction des puissances d'émission déterminées des paquets de données (DP) individuels ;
d. effectuer une première transmission du paquet de données de transmission (ÜDP) avec la puissance d'émission de première transmission ;
e. calculer une puissance d'émission de transmission répétée en fonction d'une puissance d'émission de consigne calculée sur la base de l'énergie de consigne pour le paquet de données de transmission et de la puissance d'émission pour au moins une précédente transmission du paquet de données de transmission (ÜDP).

2. Procédé selon la revendication 1, dans lequel la puissance d'émission pour le paquet de données de transmission (ÜDP) à l'étape c) est fixée sur la valeur maximale des puissances d'émission requises pour les paquets de données (DP) individuels.

3. Procédé selon la revendication 1 ou 2, dans lequel le calcul à l'étape e) de la puissance d'émission de transmission répétée est fait à partir de la différence entre la puissance d'émission de consigne pour le paquet de données de transmission (ÜDP) et la somme des puissances d'émission des précédentes transmissions du paquet de données de transmission (ÜDP).

4. Procédé selon l'une des revendications précédentes, dans lequel, au cours du calcul à l'étape e), une puissance d'émission totale visée est formée en totalisant la puissance d'émission requise pour une transmission individuelle d'un paquet de données (DP) individuel jusqu'à la transmission répétée prévue.

5. Procédé selon la revendication 3 et 4, dans lequel la différence $\Delta P(k,i)$ est formée par

$$\Delta P(k,i) = P_t(k,i) - \sum_{m=1}^{k-1} P(m)$$

$k$ indiquant la transmission répétée, $i$ un groupe de paquets de données soumis à la même exigence de qualité, $P(m)$ la puissance d'émission au cours de la transmission m et $P_t(k,i)$ la puissance d'émission totale visée pour la $k$-ième transmission et le $i$-ième groupe.

6. Procédé selon l'une des revendications précédentes, dans lequel l'exigence de qualité indique un temps de retard maximum admissible et/ou une probabilité de décodage côté récepteur.

10

**7.** Procédé selon l'une des revendications précédentes, dans lequel, au cours du calcul à l'étape d), une puissance d'émission totale est formée à partir de la puissance d'émission requise pour le paquet de données de transmission (ÜDP).

**8.** Procédé selon l'une des revendications précédentes, dans lequel une pluralité de services est proposée dans le système radio (FS), l'exigence de qualité à l'étape a) étant définie en fonction du service.

**9.** Procédé selon l'une des revendications précédentes, dans lequel un flux de données est attribué à chaque service, dans lequel, selon un ordre chronologique, des paquets de données individuels représentent les données contenues dans ce flux de données.

**10.** Procédé selon l'une des revendications 5 à 9, dans lequel un groupe est à chaque fois attribué à un service déterminé.

**11.** Procédé selon l'une des revendications précédentes, dans lequel une puissance d'émission totale de consigne, ou au moins un paramètre permettant de la déterminer, est signalé par le récepteur.

**12.** Procédé selon l'une des revendications précédentes, comprenant les étapes supplémentaires suivantes :

f. réception d'une information sur une qualité de la réception du paquet de données de transmission (ÜDP) par le récepteur du paquet de données de transmission;
g. nouvelle émission du paquet de données de transmission en fonction de l'information.

**13.** Procédé selon la revendication 12, dans lequel un nouveau calcul d'au moins une autre puissance d'émission de transmission répétée est effectué en fonction de la puissance d'émission de consigne et des puissances d'émission des précédentes transmissions.

**14.** Appareil de communication, comprenant une unité d'émission-réception pour émettre ou/et recevoir des paquets de données et une unité de processeur configurée pour la mise en oeuvre d'un procédé de transmission de paquets de données selon l'une des revendications 1 à 13.

**15.** Unité centrale pour un système radio (FS), en particulier station de base (BS), comprenant une unité d'émission-réception pour émettre ou/et recevoir des paquets de données et une unité de processeur configurée pour la mise en oeuvre d'un procédé comportant les étapes suivantes :

a. transmission d'une puissance d'émission totale de consigne, ou au moins d'un paramètre permettant de la déterminer, vers un appareil de communication ;
b. réception de paquets de données de transmission (ÜDP), émis par l'appareil de communication avec des puissances d'émission déterminées selon le procédé selon l'une des revendications 1 à 13 ;
c. décodage des paquets de données de transmission (ÜDP) reçus ; et
d. répartition des paquets de données de transmission (ÜDP) reçus en paquets de données (DP).

**16.** Système radio (FS), comprenant au moins un appareil de communication selon la revendication 14 et une unité centrale selon la revendication 15.

## FIG 1

# FIG 2

MAC-d

MAC-d PDU: | C/T | DATA |

MAC-d Flows

Multiplex

| DDI | N | DDI | N | DDI | TSN | DATA | DATA | TSN | DATA | DATA | Pad (Opt) |

MAC-es/
MAC-e

MAC-e hdr ⟶ ⟵ MAC-es PDU ⟶

HARQ    MAC-e PDU:

L1

| DATA |

EP 1 829 243 B1

**EP 1 829 243 B1**

**IN DER BESCHREIBUNG AUFGEFÜHRTE DOKUMENTE**

**In der Beschreibung aufgeführte Patentdokumente**

- WO 03017524 A